# EUROPEAN PATENT SPECIFICATION

(11) **EP 4 303 130 B1**
(45) Date of publication and mention of the grant of the patent: **04.11.2026**
(21) Application number: 23183913.5
(22) Date of filing: 06.07.2023
(51) Int. Cl.: B64U 70/92, B64U 80/10

(54) **UAV DOCKING STATION AND UAV ASSEMBLY**
DOCKSTATION FÜR UNBEMANNTE FLUGZEUGE UND ANORDNUNG VON UNBEMANNTEN FLUGZEUGEN
STATION D'ACCUEIL D'AÉRONEF SANS PILOTE ET ENSEMBLE D'AÉRONEFS SANS PILOTE

(30) Priority: 06.07.2022 CN 202221744664 U
(43) Date of publication of application: 10.01.2024
(73) Proprietor: Autel Robotics Co., Ltd., Shenzhen, Guangdong 518055 (CN)
(72) Inventor: Liao, Jianlong, Shenzhen, Guangdong, 518055 (CN); Liao, Yuelong, Shenzhen, Guangdong, 518055 (CN)
(74) Representative: Petraz, Gilberto Luigi

(56) References cited:
- CN-B- 108 438 245
- CN-U- 209 938 989
- CN-U- 214 241 270
- US-A1- 2016 364 989
- US-A1- 2018 295 327
- US-A1- 2018 354 649
- US-A1- 2021 107 682

## Description

### BACKGROUND

### Technical Field

The embodiments of the present disclosure relate to the technical field of unmanned aerial vehicles (UAVs), and particularly relate to a fixed-wing unmanned aerial vehicle (UAV) docking station and a fixed-wing UAV assembly.

### Related Art

Unmanned aerial vehicle (UAV) has the advantages of small volume, easy control and so on. From cable inspection, ecological environment monitoring to emergency site command, the unmanned aerial vehicle has been widely used in more and more fields and can undertake more and more tasks.

At present, the price of UAVs is still relatively high, belonging to the more expensive items. In order to better preserve the UAV increase its endurance, the UAV is usually equipped with a special UAV docking station, and the UAV is taken out from the UAV docking station when it is used, or the UAV needs to return to the UAV docking station for power exchange because of insufficient power in the process of operation. However, the inventor of the present disclosure has found that the UAV docking station for accommodating the fixed-wing UAV is relatively large, and the relatively large volume makes the weight of the UAV docking station relatively large, which is not conducive to movement;

US20180354649A1 has disclosed a system for use in the secure recovery, management and storage of a drone can include a housing, at least one electromechanically operated door securing access to the housing and a retractable platform that can electromechanically extend from inside the housing to an area outside the housing when the at least one electromechanically operated door is opened. The retractable platform can serve as a landing pad for a drone and/or as a base onto which a drone can be received. The retractable platform can electromechanically move back into the housing and the door can close after receiving the drone.

US20180295327A1 has disclosed a deployable surveillance, security and/or enforcement unit, comprising: a container configured for deployment from a vehicle or by air at a surveillance, security and/or enforcement location; and two or more removable modules having equipment for performing surveillance, security and/or enforcement operations, wherein the container has a housing with at least one opening for receiving the two or more modules into the container. The unit may be comprised as part of a vehicle.

CN214241270U has disclosed a drone maintenance station, which reveals that the drone has a housing with an accommodation space inside. A hatch is formed on the housing for the drone to enter and exit. The accommodation space includes wireless charging equipment and a helipad. The wireless charging equipment comprises an input port, a working system, and an output end, wherein the output end is set on the helipad.

CN209938989U has disclosed a drone space station, which reveals a drone space station cabin. The drone space station cabin includes a cabin body and a hatch. The cabin body has a top opening, and the hatch can selectively close or open the top opening through a motion mechanism. The motion mechanism includes a rail mechanism and a drive mechanism for driving the hatch to move.

CN108438245B has disclosed a drawer-type drone nest, which reveals a drawer-type drone nest including a cavity with an opening and a movable door panel that blocks the opening. It also includes a drive mechanism for driving the helipad and the drone to enter and exit the cavity through the opening. The helipad is horizontally set, and the cavity and helipad form a drawer shape.

US20160364989A1 has disclosed unmanned aerial vehicle management. A base module may be used to receive and house one or more unmanned aerial vehicles (UAVs) via one or more cavities. The base module receives commands from a manager device and identifies a flight plan that allows a UAV to execute the received commands. The base module transfers the flight plan to the UAV and frees the UAV.

US20210107682A1 has disclosed an automated Docking Of Unmanned Aerial Vehicle; some systems include an unmanned aerial vehicle including a propulsion mechanism, an image sensor, and processing apparatus; and a dock including a landing surface configured to hold the unmanned aerial vehicle and a fiducial on the landing surface, wherein the processing apparatus is configured to: control the propulsion mechanism to cause the unmanned aerial vehicle to fly to a first location in a vicinity of the dock; access one or more images captured using the image sensor; detect the fiducial in at least one of the one or more images; determine a pose of the fiducial based on the one or more images; and control, based on the pose of the fiducial, the propulsion mechanism to cause the unmanned aerial vehicle to land on the landing surface.

### SUMMARY

The invention is identified in the appended claims.

The technical problem to be mainly solved by the embodiments of the present invention is to provide an unmanned aerial vehicle (UAV) docking station and an UAV assembly, which can reduce the volume and weight of the UAV docking station.

In a first aspect, one embodiment of the present invention provides a fixed-wing UAV docking station as in claim 1. The UAV docking station includes:
a housing provided with an accommodation cavity and a hatch communicating with the accommodation cavity;
a door connected to the housing, the door being provided at the hatch and the door being capable of opening or closing the hatch;
at least two extension pieces, and two of the extension pieces are symmetrically arranged at both sides of the housing;
the two extension pieces are each provided with an extension cavity, each of the two extension pieces being connected to the housing, each of the two extension pieces being provided on a side portion on one end, near the hatch, of the housing, and extending along a direction of the housing towards the hatch, and the extension cavity communicating with the accommodation cavity;
a cross-sectional area where the two extension cavities communicate with the accommodation cavity is greater than a cross-sectional area of the accommodation cavity;
and the two extension cavities are configured for accommodating a fixed wing part of the UAV.

Preferably, the extension piece is integrally formed with the housing.

It is also possible that the extension piece is removably connected to the housing.

According to embodiments, the UAV docking station further includes a first drive mechanism disposed within the accommodation cavity and connected to the door, the first drive mechanism being used for driving the door to open or close the hatch.

According to embodiments, the door is rotatably connected to the housing, and the first drive mechanism comprises a first drive motor and a first connector, the first drive motor being provided in the accommodation cavity, the first drive motor being connected to one end of the first connector, and the other end of the first connector being connected to the door.

According to embodiments, the UAV docking station further includes a parking apron disposed within the accommodation cavity.

According to embodiments, the UAV docking station further includes a parking apron and a second drive mechanism, the second drive mechanism being disposed in the accommodation cavity, the parking apron being connected to the second drive mechanism, the second drive mechanism being capable of driving the parking apron out of the housing from the accommodation cavity or driving the parking apron into the accommodation cavity from outside the housing.

According to embodiments, the second drive mechanism includes a second drive motor, a second connector and a guide rail, the second drive motor and the guide rail being both arranged in the accommodation cavity, the second connector being movably arranged on the guide rail, the second drive motor being connected to the second connector, and the parking apron being fixed to the second connector; and
the second connector is movable along the guide rail upon driving by the second drive motor.

In a second aspect, another embodiment of the present disclosure provides a fixed-wing UAV assembly. The UAV assembly includes the UAV docking station according to any of the above-mentioned embodiments; and
an UAV, the UAV being able to be accommodated in the accommodation cavity of the UAV docking station;
a fuselage of the UAV being accommodated in the accommodation cavity, and a fixed wing of the UAV being accommodated in the extension cavity.

In the embodiments of the present disclosure, by providing an extension piece on the housing, and allowing the extension cavity of the extension piece to communicate with the accommodation cavity of the housing, the cross-sectional area where the extension cavity communicates with the accommodation cavity is greater than the cross-sectional area of the accommodation cavity, so that the UAV docking station can accommodate an UAV in a smaller volume.

### BRIEF DESCRIPTION OF THE DRAWINGS

FIG. 1 is an overall schematic diagram of an embodiment of the unmanned aerial vehicle (UAV) docking station of the present disclosure;
FIG. 2 is a schematic diagram from another perspective view of the embodiment of the UAV docking station of the present disclosure;
FIG. 3 is a schematic diagram of another embodiment of the present UAV docking station of the disclosure;
FIG. 4 is a schematic diagram of a first drive mechanism of an embodiment of the UAV docking station of the present disclosure;
FIG. 5 is a schematic diagram of a second drive mechanism of an embodiment of the UAV docking station of the present disclosure;
FIG. 6 is a schematic diagram of an embodiment of an UAV assembly of the present disclosure.

### DETAILED DESCRIPTION

In order to facilitate an understanding of the present disclosure, a more detailed description of the disclosure is provided below in connection with the accompanying drawings and specific embodiments. It will be understood that when an element is referred to as being "fixed" to another element, it can be directly on the other element or intervening elements may be present. When an element is referred to as being "connected" to another element, it can be directly connected to the other element or intervening elements may be present. The terms "vertical", "horizontal", "left", "right", and the like are used herein for descriptive purposes only.

Unless otherwise defined, all technical and scientific terms used herein have the same meaning as commonly understood by one of ordinary skill in the art to which the present disclosure belongs. The terminology used in the description of the present disclosure herein is for the purpose of describing particular embodiments only and is not intended to be limiting of the disclosure. As used herein, the term "and/or" includes any and all combinations of one or more of the associated listed items.

With the rise of intelligent unmanned equipment, in the technical field of unmanned aerial vehicles (UAVs), the types of UAVs include multi-rotor foldable UAVs and fixed-wing UAVs. The ulti-rotor foldable UAV relies on the lift generated by multiple rotors to balance the gravity of the UAV, so that the UAV can fly up, by changing the speed of each rotor to control the stability and attitude of the UAV. The ulti-rotor foldable UAV can hover and fly at any speed in a certain speed range. The fixed-wing UAV relies on the thrust generated by propeller as the power of forward flight of the UAV. The main lift comes from the relative motion between the fixed wing and air. Therefore, fixed-wing UAV must have a certain relative velocity without air to have lift to fly. Based on this principle, fixed-wing UAV has the characteristics of fast flight speed, relative economy, large carrying capacity and strong endurance. Since the wing of a fixed-wing UAV is not foldable, the UAV docking station for accommodating the fixed-wing UAV is generally large in its entirety, thereby allowing the accommodation cavity of the UAV docking station to accommodate the fixed wing of the UAV. In order to reduce the volume of the UAV docking station accommodating the fixed-wing UAV and reduce the weight of the UAV docking station, the present disclosure provides an embodiment of the UAV docking station.

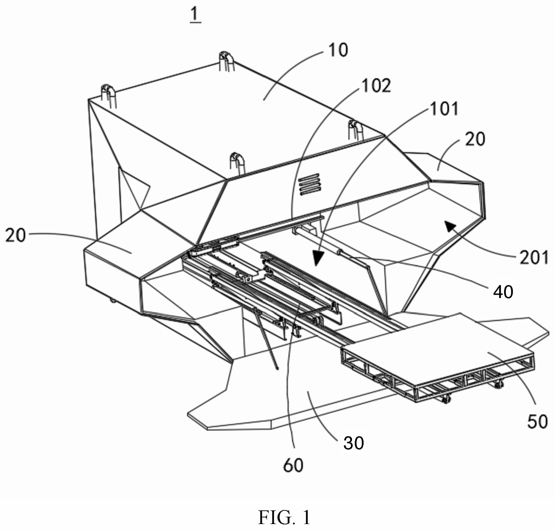

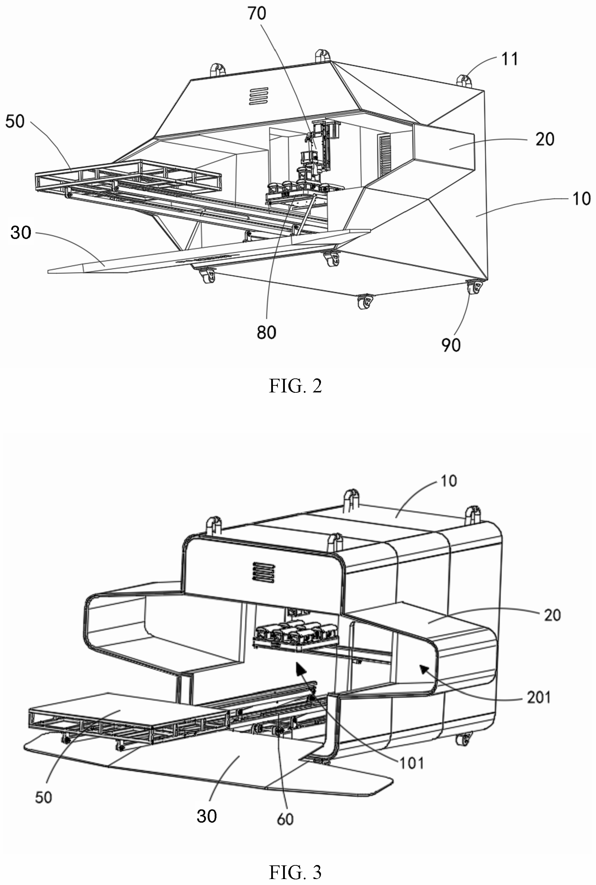

With reference to FIG. 1 and FIG. 2, an unmanned aerial vehicle (UAV) docking station 1 comprises a housing 10, an extension piece 20 and a door 30, wherein the housing 10 is provided with an accommodation cavity 101 and a hatch 102 communicating with the accommodation cavity 101, the extension piece 20 is provided with an extension cavity 201, the extension piece 20 is connected to the housing 10, the extension piece 20 is provided on a side portion on one end, near the hatch 102, of the housing 10, the extension cavity 201 communicates with the accommodation cavity 101, and a cross-sectional area where the extension cavity 201 communicates with the accommodation chamber 101 is greater than a cross-sectional area of the accommodation chamber 101, the door 30 is connected to the housing 10, and the door 30 is provided at the hatch 102 and the door 30 is capable of opening or closing the hatch 102. When the UAV is accommodated in the UAV docking station 1, a fixed-wing part of the UAV is accommodated in the accommodation cavity 101, and a rear half part, near a tail part, of the fixed wing of the UAV can be accommodated in the extension cavity 201 of the extension piece 20. Since the extension piece 20 is arranged at one end, near the door 30, of the housing 10 and the extension piece 20 extends towards an outside of the housing 10, only the cross-sectional area of the part near the door 30 of the UAV docking station 1 is larger, namely, a volume of an end near the door 30 is larger, and the volume of the UAV docking station 1 at the part away from the door 30 can be reduced. The reduction in volume of the UAV docking station 1 improves the overall weight of the UAV docking station 1, making the UAV docking station 1 lighter.

In the embodiment of the present disclosure, a number of the extension pieces 20 is at least two, and two of the extension pieces 20 are symmetrically arranged at both sides of the housing 10. The symmetrical arrangement of the extension pieces 20 improves the stability of the UAV docking station 1.

In some embodiments, the extension piece 20 is integrally formed with the housing 10.

In other embodiments, since the models of fixed-wing UAVs are different, and wing lengths of the fixed wings are different between different models of fixed-wing UAVs, an UAV with a longer fixed wing requires a larger space of the extension cavity 201 of the UAV docking station, and an UAV with a shorter fixed wing can allow the space of the extension cavity 201 to be smaller, so that in order to be able to adapt to more types of fixed-wing UAVs by freely changing the extension cavity 201 of the UAV docking station 1, the extension piece 20 is detachably connected to the housing 10, wherein the number of the extension pieces 20 is set as two in a group as an extension portion, the extension portions are provided in a plurality, and the structure and shape of the extension pieces 20 of the plurality of the extension portions are different. With reference to FIG. 3, illustratively, the present embodiment exemplifies one of the structures and profiles of the extension piece 20.

In some embodiments, in order to facilitate the transport and transfer of the UAV docking station 1, the housing 10 is provided with a traction element 11, which is capable of facilitating the transfer of the UAV docking station 1 by a transfer mechanism by grasping the traction element 11 during the production and preparation of the UAV docking station 1.

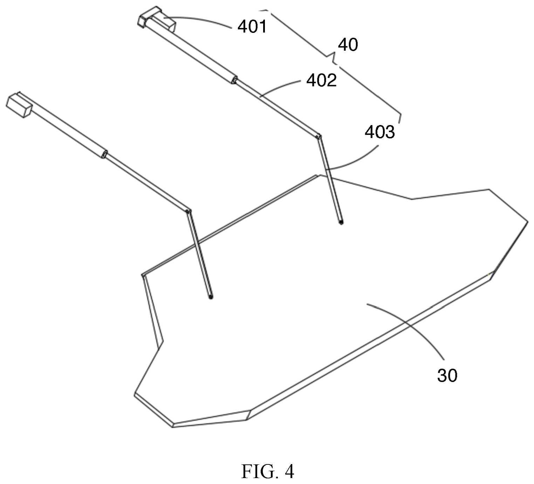

With reference to FIG. 4, in the embodiment of the present disclosure, the UAV docking station 1 further comprises a first drive mechanism 40 disposed within the accommodation cavity 101 and connected to the door 30, the first drive mechanism 40 being used for driving the door 30 to open or close the hatch 102.

Specifically, the door 30 is rotatably connected to the housing 10, and the first drive mechanism 40 comprises a first drive motor 401, a first telescopic rod 402 and a first connector 403, wherein the first drive motor 401 is arranged in the accommodation cavity 101, one end of the first telescopic rod 402 is connected to the first drive motor 401, the other end of the first telescopic rod 402 is rotatably connected to one end of the first connector 403, and the other end of the first connector 403 is rotatably connected to the door 30. When the door 30 needs to open the hatch 102 of the housing 10, the first drive motor 401 drives the telescopic rod to extend, and the telescopic rod drives the first connector 403 to push the door 30, so that the door 30 rotates relatively to the housing 10 to complete the door 30 opening the hatch 102. When the hatch 102 needs to be closed, the first drive motor 401 drives the telescopic rod to contract, and the telescopic rod drives the first connector 403 to pull the door 30, so that the door 30 rotates relatively to the housing 10 until the hatch 102 is covered.

In the embodiment of the present disclosure, the UAV docking station 1 further comprises a parking apron 50 disposed within the accommodation cavity 101. The parking apron 50 is used to park the UAV.

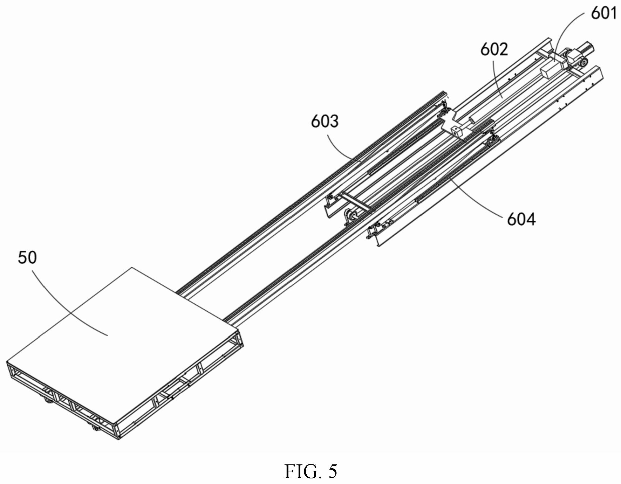

Further, with reference to FIG. 5, the UAV docking station 1 further comprises a second drive mechanism 60, which is connected to the parking apron 50 and which is capable of driving the parking apron 50 out of or into the accommodation chamber 101.

Specifically, the second drive mechanism 60 comprises a second drive motor 601, a second telescopic rod 602, a second connector 603 and a guide rail 604, the second drive motor 601 and the guide rail 604 are both arranged in the accommodation cavity 101, one end of the second telescopic rod 602 is connected to the second drive motor 601, the other end of the second telescopic rod 602 is connected to the second connector 603, the second connector 603 is movably arranged on the guide rail 604, and the parking apron 50 is fixed with the second connector 603. The second connector 603 is movable along the guide rail 604 upon driving by the second drive motor 601. When the UAV docking station 1 accommodating the UAV needs the UAV to go out for operation, or when the UAV docking station 1 which is empty needs to accommodate the UAV to go home, the door 30 is opened, the second drive motor 601 drives the second telescopic rod 602 to extend, and the second telescopic rod 602 drives the second connector 603 to slide on the guide rail 604, so that the parking apron 50 gradually extends out of the hatch 102 from the accommodation cavity 101 and is exposed to the outside of the UAV docking station 1. When the UAV needs to be accommodated in the accommodation cavity 101 by the UAV docking station 1 after the UAV stops at the parking apron 50, the second drive motor 601 drives the second telescopic rod 602 to contract, and the second telescopic rod 602 drives the second connector 603 to slide on the guide rail 604, so that the parking apron 50 gradually enters the accommodation cavity 101 from the outside of the UAV docking station 1, and then the hatch door 30 closes the hatch 102.

In some other embodiments, to facilitate movement of the UAV docking station 1, the UAV docking station is further provided with a caster 90.

In the embodiment of the present disclosure, by providing an extension piece 20 on the housing, and allowing the extension cavity 201 of the extension piece 20 to communicate with the accommodation cavity 101 of the housing 10, the cross-sectional area where the extension cavity 201 communicates with the accommodation cavity 101 is greater than the cross-sectional area of the accommodation cavity 101, so that the UAV docking station 1 can accommodate an UAV in a smaller volume.

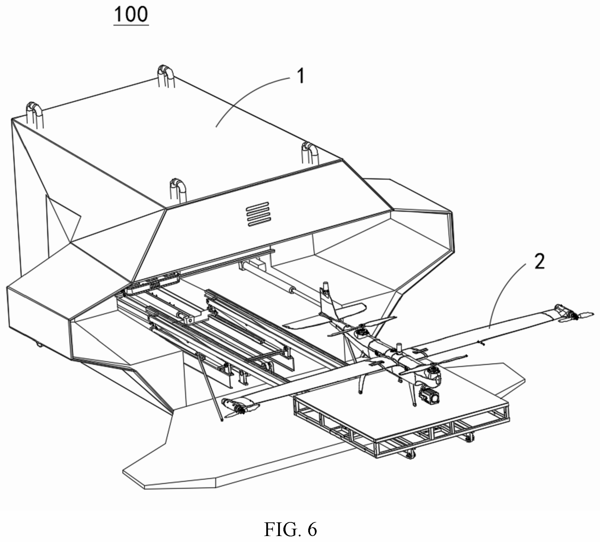

With reference to FIG. 6, the present disclosure further provides an embodiment of an UAV assembly 100, wherein the UAV assembly 100 comprises the UAV docking station 1 according to any one of the above-mentioned embodiments and an UAV 2, wherein the UAV 2 is accommodated in the accommodation cavity 101 of the UAV docking station 1, and a fixed wing of the UAV 2 is accommodated in the extension cavity 201. The structure and function of the UAV docking station 1 are described with reference to the above-mentioned embodiments, and will not be described in detail herein.

It should be noted that the description of the present disclosure and the drawings thereof provide preferred embodiments of the present disclosure. However, the present disclosure can be realized in many different forms and is not limited to the embodiments described in the description, and these embodiments are not provided as additional limitations on the contents of the present disclosure, but these embodiments are provided such that the content disclosed in the present disclosure can be more fully and thoroughly understood from the disclosure. Further, those skilled in the art will be able to make improvements or modifications in light of the foregoing teachings, as long as they fall within the scope of protection of the appended claims of the present disclosure.

## Claims

1. A fixed-wing unmanned aerial vehicle (UAV) docking station (1), comprising:
a housing (10) provided with an accommodation cavity (101) and a hatch (102) communicating with the accommodation cavity (101);
a door (30) connected to the housing (10), the door (30) being provided at the hatch (102) and the door (30) being capable of opening or closing the hatch (102);
at least two extension pieces (20), and two of the extension pieces (20) are symmetrically arranged at both sides of the housing (10);
**characterized in that**
said two extension pieces (20) are each provided with an extension cavity (201), each of said two extension pieces (20) being connected to the housing (10), each of said two extension pieces (20) being provided on a side portion on one end, near the hatch (102), of the housing (10), and extending along a direction of the housing (10) towards the hatch (102), and the extension cavity (201) communicating with the accommodation cavity (101);
**in that** a cross-sectional area where said two extension cavities (201) communicate with the accommodation cavity (101) is greater than a cross-sectional area of the accommodation cavity (101);
and **in that** said two extension cavities (201) are configured for accommodating a fixed wing part of the UAV.

2. The fixed-wing unmanned aerial vehicle (UAV) docking station (1) according to claim 1, **characterized in that** the extension piece (20) is integrally formed with the housing (10).

3. The fixed-wing unmanned aerial vehicle (UAV) docking station (1) according to claim 1, **characterized in that** the extension piece (20) is removably connected to the housing (10).

4. The fixed-wing unmanned aerial vehicle (UAV) docking station (1) according to claim 1, further **characterized by** comprising a first drive mechanism (40) disposed within the accommodation cavity (101) and connected to the door (30), the first drive mechanism (40) being used for driving the door (30) to open or close the hatch (102).

5. The fixed-wing unmanned aerial vehicle (UAV) docking station (1) according to claim 4, **characterized in that** the door (30) is rotatably connected to the housing (10), and the first drive mechanism (40) comprises a first drive motor (401) and a first connector (403), the first drive motor(401) being provided in the accommodation cavity (101), the first drive motor(401) being connected to one end of the first connector (403), and the other end of the first connector (403) being connected to the door (30).

6. The fixed-wing unmanned aerial vehicle (UAV) docking station (1) according to claim 5, further **characterized by** comprising a parking apron (50) disposed within the accommodation cavity (101).

7. The fixed-wing unmanned aerial vehicle (UAV) docking station (1) according to claim 5, further comprising a parking apron (50) and a second drive mechanism (60), the second drive mechanism (60) being disposed in the accommodation cavity (101), the parking apron (50) being connected to the second drive mechanism (60), the second drive mechanism (60) being capable of driving the parking apron (50) out of the housing (10) from the accommodation cavity (101) or driving the parking apron (50) into the accommodation cavity (101) from outside the housing (10).

8. The fixed-wing unmanned aerial vehicle (UAV) docking station (1) according to claim 7, **characterized in that** the second drive mechanism (60) comprises a second drive motor (601), a second connector (603) and a guide rail (604), the second drive motor (601) and the guide rail (604) being both arranged in the accommodation cavity (101), the second connector (603) being movably arranged on the guide rail (604), the second drive motor (601) being connected to the second connector (603), and the parking apron (50) being fixed to the second connector (603);
the second connector (603) is movable along the guide rail (604) upon driving by the second drive motor (601).

9. A fixed-wing unmanned aerial vehicle (UAV) assembly, **characterized by** comprising:
the UAV docking station (1) according to any one of claims 1-8; and
an UAV, the UAV being able to be accommodated in the accommodation cavity (101) of the UAV docking station (1);
a fuselage of the UAV being accommodated in the accommodation cavity (101), and a fixed wing of the UAV being accommodated in the extension cavity (201).

## Patentansprüche

1. Andockstation (1) für unbemanntes Starrflügel-Fluggerät (UAV), umfassend:
ein Gehäuse (10), das mit einem Aufnahmehohlraum (101) und einer Klappe (102) versehen ist, die mit dem Aufnahmehohlraum (101) kommuniziert;
eine Tür (30), die mit dem Gehäuse (10) verbunden ist, wobei die Tür (30) an der Klappe (102) vorgesehen ist und die Tür (30) dazu fähig ist, die Klappe (102) zu öffnen oder zu schließen;
zumindest zwei Verlängerungsstücke (20), und zwei der Verlängerungsstücke (20) an beiden Seiten des Gehäuses (10) symmetrisch angeordnet sind;
**dadurch gekennzeichnet, dass**
die zwei Verlängerungsstücke (20) jeweils mit einem Verlängerungshohlraum (201) versehen sind, jedes von den zwei Verlängerungsstücken (20) mit dem Gehäuse (10) verbunden ist, jedes von den zwei Verlängerungsstücken (20) an einem Seitenabschnitt an einem Ende, nahe bei der Klappe (102), des Gehäuses (10) vorgesehen ist, und sich entlang einer Richtung des Gehäuses (10) zur Klappe (102) hin erstreckt, und der Verlängerungshohlraum (201) mit dem Aufnahmehohlraum (101) kommuniziert;
dass eine Querschnittsfläche, wo die zwei Verlängerungshohlräume (201) mit dem Aufnahmehohlraum (101) kommunizieren, als eine Querschnittsfläche des Aufnahmehohlraums (101) größer ist;
und dass die zwei Verlängerungshohlräume (201) dafür ausgelegt sind, einen Starrflügelteil des UAV aufzunehmen.

2. Andockstation (1) für unbemanntes Starrflügel-Fluggerät (UAV) nach Anspruch 1, **dadurch gekennzeichnet, dass** das Verlängerungsstück (20) mit dem Gehäuse (10) einstückig ausgebildet ist.

3. Andockstation (1) für unbemanntes Starrflügel-Fluggerät (UAV) nach Anspruch 1, **dadurch gekennzeichnet, dass** das Verlängerungsstück (20) mit dem Gehäuse (10) abnehmbar verbunden ist.

4. Andockstation (1) für unbemanntes Starrflügel-Fluggerät (UAV) nach Anspruch 1, ferner **dadurch gekennzeichnet, dass** sie einen ersten Antriebsmechanismus (40) umfasst, der innerhalb des Aufnahmehohlraums (101) angeordnet ist und mit der Tür (30) verbunden ist, wobei der erste Antriebsmechanismus (40) verwendet wird, um die Tür (30) anzutreiben, um die Klappe (102) zu öffnen oder zu schließen.

5. Andockstation (1) für unbemanntes Starrflügel-Fluggerät (UAV) nach Anspruch 4, **dadurch gekennzeichnet, dass** die Tür (30) mit dem Gehäuse (10) drehbar verbunden ist, und der erste Antriebsmechanismus (40) einen ersten Antriebsmotor (401) und einen ersten Verbinder (403) umfasst, wobei der erste Antriebsmotor (401) im Aufnahmehohlraum (101) vorgesehen ist, der erste Antriebsmotor (401) mit einem Ende des ersten Verbinders (403) verbunden ist, und das andere Ende des ersten Verbinders (403) mit der Tür (30) verbunden ist.

6. Andockstation (1) für unbemanntes Starrflügel-Fluggerät (UAV) nach Anspruch 5, ferner **dadurch gekennzeichnet, dass** sie eine Abstellfläche (50) umfasst, die innerhalb des Aufnahmehohlraums (101) angeordnet ist.

7. Andockstation (1) für unbemanntes Starrflügel-Fluggerät (UAV) nach Anspruch 5, ferner umfassend eine Abstellfläche (50) und einen zweiten Antriebsmechanismus (60), der zweite Antriebsmechanismus (60) im Aufnahmehohlraum (101) angeordnet ist, die Abstellfläche (50) mit dem zweiten Antriebsmechanismus (60) verbunden ist, wobei der zweite Antriebsmechanismus (60) dazu fähig ist, die Abstellfläche (50) aus dem Gehäuse (10) heraus von dem Aufnahmehohlraum (101) anzutreiben oder die Abstellfläche (50) in den Aufnahmehohlraum (101) hinein von dem Äußeren des Gehäuses (10) anzutreiben.

8. Andockstation (1) für unbemanntes Starrflügel-Fluggerät (UAV) nach Anspruch 7, **dadurch gekennzeichnet, dass** der zweite Antriebsmechanismus (60) einen zweiten Antriebsmotor (601), einen zweiten Verbinder (603) und eine Führungsschiene (604) umfasst, der zweite Antriebsmotor (601) und die Führungsschiene (604) beide im Aufnahmehohlraum (101) angeordnet sind, der zweite Verbinder (603) an der Führungsschiene (604) beweglich angeordnet ist, der zweite Antriebsmotor (601) mit dem zweiten Verbinder (603) verbunden ist, und die Abstellfläche (50) an dem zweiten Verbinder (603) befestigt ist;
der zweite Verbinder (603) entlang der Führungsschiene (604) beim Antrieb durch den zweiten Antriebsmotor (601) beweglich ist.

9. Anordnung eines unbemannten Starrflügel-Fluggeräts (UAV), **dadurch gekennzeichnet, dass** sie umfasst:
die UAV-Andockstation (1) nach einem der Ansprüche 1-8; und
ein UAV, wobei das UAV dazu fähig ist, im Aufnahmehohlraum (101) der UAV-Andockstation (1) aufgenommen zu werden;
wobei ein Rumpf des UAV im Aufnahmehohlraum (101) aufgenommen wird, und ein starrer Flügel des UAV im Verlängerungshohlraum (201) aufgenommen wird.

## Revendications

1. Station d'accueil (1) de véhicule aérien sans pilote (UAV) à voilure fixe, comprenant :
un boîtier (10) pourvu d'une cavité de logement (101) et d'une ouverture (102) communiquant avec la cavité de logement (101) ;
une porte (30) reliée au boîtier (10), la porte (30) étant prévue au niveau de l'ouverture (102) et la porte (30) étant apte à ouvrir ou à fermer l'ouverture (102) ;
au moins deux pièces d'extension (20), et deux des pièces d'extension (20) sont disposées symétriquement des deux côtés du boîtier (10) ;
**caractérisée en ce que**
lesdites deux pièces d'extension (20) sont chacune pourvues d'une cavité d'extension (201), chacune desdites deux pièces d'extension (20) étant reliée au boîtier (10), chacune desdites deux pièces d'extension (20) étant prévue sur une partie latérale d'une extrémité, proche de l'ouverture (102), du boîtier (10), et s'étendant selon une direction du boîtier (10) vers l'ouverture (102), et la cavité d'extension (201) communiquant avec la cavité de logement (101) ;
**en ce qu'**une aire de section transversale au niveau de laquelle lesdites deux cavités d'extension (201) communiquent avec la cavité de logement (101) est supérieure à une aire de section transversale de la cavité de logement (101) ;
et **en ce que** lesdites deux cavités d'extension (201) sont configurées pour loger une partie d'aile fixe de l'UAV.

2. La station d'accueil (1) de véhicule aérien sans pilote (UAV) à voilure fixe selon la revendication 1, **caractérisée en ce que** la pièce d'extension (20) est formée d'un seul tenant avec le boîtier (10).

3. La station d'accueil (1) de véhicule aérien sans pilote (UAV) à voilure fixe selon la revendication 1, **caractérisée en ce que** la pièce d'extension (20) est reliée de manière amovible au boîtier (10).

4. La station d'accueil (1) de véhicule aérien sans pilote (UAV) à voilure fixe selon la revendication 1, **caractérisée en outre en ce qu'**elle comprend un premier mécanisme d'entraînement (40) disposé à l'intérieur de la cavité de logement (101) et relié à la porte (30), le premier mécanisme d'entraînement (40) servant à entraîner la porte (30) pour ouvrir ou fermer l'ouverture (102).

5. La station d'accueil (1) de véhicule aérien sans pilote (UAV) à voilure fixe selon la revendication 4, **caractérisée en ce que** la porte (30) est reliée de manière rotative au boîtier (10), et le premier mécanisme d'entraînement (40) comprend un premier moteur d'entraînement (401) et un premier élément de liaison (403), le premier moteur d'entraînement (401) étant prévu dans la cavité de logement (101), le premier moteur d'entraînement (401) étant relié à une extrémité du premier élément de liaison (403), et l'autre extrémité du premier élément de liaison (403) étant reliée à la porte (30).

6. La station d'accueil (1) de véhicule aérien sans pilote (UAV) à voilure fixe selon la revendication 5, **caractérisée en outre en ce qu'**elle comprend une plateforme de stationnement (50) disposée à l'intérieur de la cavité de logement (101).

7. La station d'accueil (1) de véhicule aérien sans pilote (UAV) à voilure fixe selon la revendication 5, comprenant en outre une plateforme de stationnement (50) et un second mécanisme d'entraînement (60), le second mécanisme d'entraînement (60) étant disposé dans la cavité de logement (101), la plateforme de stationnement (50) étant reliée au second mécanisme d'entraînement (60), le second mécanisme d'entraînement (60) étant apte à entraîner la plateforme de stationnement (50) hors du boîtier (10) depuis la cavité de logement (101) ou à entraîner la plateforme de stationnement (50) dans la cavité de logement (101) depuis l'extérieur du boîtier (10).

8. La station d'accueil (1) de véhicule aérien sans pilote (UAV) à voilure fixe selon la revendication 7, **caractérisée en ce que** le second mécanisme d'entraînement (60) comprend un second moteur d'entraînement (601), un second élément de liaison (603) et un rail de guidage (604), le second moteur d'entraînement (601) et le rail de guidage (604) étant tous deux agencés dans la cavité de logement (101), le second élément de liaison (603) étant agencé de manière mobile sur le rail de guidage (604), le second moteur d'entraînement (601) étant relié au second élément de liaison (603), et la plateforme de stationnement (50) étant fixée au second élément de liaison (603) ;
le second élément de liaison (603) est mobile le long du rail de guidage (604) lorsqu'il est entraîné par le second moteur d'entraînement (601).

9. Ensemble de véhicule aérien sans pilote (UAV) à voilure fixe, **caractérisé en ce qu'**il comprend :
la station d'accueil (1) d'UAV selon l'une quelconque des revendications 1 à 8 ; et
un UAV, l'UAV pouvant être logé dans la cavité de logement (101) de la station d'accueil (1) d'UAV ;
un fuselage de l'UAV étant logé dans la cavité de logement (101), et une aile fixe de l'UAV étant logée dans la cavité d'extension (201).
